(19) Europäisches Patentamt
European Patent Office
Office européen des brevets

(11) **EP 3 878 651 A1**

(12) **EUROPEAN PATENT APPLICATION**
published in accordance with Art. 153(4) EPC

(43) Date of publication:
**15.09.2021 Bulletin 2021/37**

(51) Int Cl.:
*B32B 27/40* (2006.01)       *D06N 3/14* (2006.01)
*C09D 175/08* (2006.01)     *C09J 175/04* (2006.01)
*C09J 175/08* (2006.01)     *C08G 18/00* (2006.01)
*C08G 18/28* (2006.01)     *C08G 18/40* (2006.01)
*C08G 18/48* (2006.01)

(21) Application number: **19883273.5**

(22) Date of filing: **07.11.2019**

(86) International application number:
**PCT/JP2019/043604**

(87) International publication number:
**WO 2020/095977 (14.05.2020 Gazette 2020/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.11.2018 JP 2018211317**

(71) Applicant: **DAINICHISEIKA COLOR & CHEMICALS
MFG. CO., LTD.**
**Chuo-ku**
**Tokyo 103-8383 (JP)**

(72) Inventors:
• **SUZUKI, Yusuke**
  **Tokyo 103-8383 (JP)**
• **MURAKAWA, Tatsuzo**
  **Tokyo 103-8383 (JP)**
• **SASAKI, Kazuya**
  **Tokyo 103-8383 (JP)**

(74) Representative: **Vossius & Partner**
**Patentanwälte Rechtsanwälte mbB**
**Siebertstraße 3**
**81675 München (DE)**

(54) **AQUEOUS POLYURETHANE RESIN DISPERSION, PAINT, FILM CONFIGURATION, AND STRUCTURE**

(57)    An aqueous polyurethane resin dispersion has a non-volatile content of not less than 40% by mass and includes polyurethane resin particles dispersed in water. The polyurethane resin particles contain a polyol component, an isocyanate component, and a hydrophilic alkylene oxide component having at least one active hydrogen group and an alkylene oxide. The content of the hydrophilic alkylene oxide component in the polyurethane resin particles is 1 to 25% by mass. The volume average particle size of the polyurethane resin particles is 0.3 to 5 $\mu$m.

EP 3 878 651 A1

**Description**

Technical Field

The present invention relates to an aqueous polyurethane resin dispersion, a paint, a film configuration, and a structure.

Background Art

Polyurethane resins are excellent in various physical properties such as wear resistance, bending properties, flexibility, softness, processability, adhesiveness, and chemical resistance, and are also excellent in suitability for various processing methods. Therefore, polyurethane resins are widely used as binders of various materials such as a material for synthetic artificial leather (general term for artificial leather and synthetic leather), a coating material, an ink, a paint, etc., or as materials for films, sheets, or other molded products, and polyurethane resins suitable for a variety of applications have been proposed.

In particular, an aqueous dispersion of a polyurethane resin, which has been emulsifiable and dispersible in water by imparting hydrophilicity to the resin, can easily make a film by drying the resin after coating. The film has excellent mechanical properties, durability, chemical resistance, wear resistance, etc. Therefore, an aqueous polyurethane resin dispersion is widely used for a paint, an adhesive, a fiber processing agent, a paper processing agent, an ink, etc. A solvent-based urethane, i.e. a solution of a polyurethane resin in an organic solvent, has heretofore been used in such applications. However, because of problems such as the toxicity of an organic solvent, the risk of fire, and environmental pollution, there has recently been a shift from a solvent-based urethane to an aqueous polyurethane resin dispersion.

Various types of aqueous polyurethane resin dispersions that meet various property requirements are known. For example, patent document 1 discloses a water-based urethane resin having, in the molecular chain, (A) polyoxyalkylene glycol containing at least 50% by weight of ethylene oxide repeating units and/or (B) one-ended polyoxyalkylene glycol containing at least 50% by weight of ethylene oxide repeating units.

Citation List

Patent Literature

Patent document 1: Japanese Patent No. 3972234

Summary of Invention

Technical Problem

Conventional aqueous polyurethane resin dispersions, having the properties of one-component polyurethane, have a small particle size (about 0.01 to 0.2 $\mu$m), and their non-volatile content has an upper limit of about 40% by mass. An aqueous polyurethane resin dispersion having a low non-volatile content contains a lot of water, and therefore has the problem of a large amount of water (volatile component) to be discharged out of the system in a drying process as well as the problem of a large amount of energy required for the drying process. Thus, in view of the productivity, the non-volatile content of an aqueous polyurethane resin dispersion is preferably not less than about 40% by mass.

It is conceivable to increase the particle size of polyurethane resin in order to increase the non-volatile content. However, the increase in the particle size increases the rate of sedimentation of the particles, and thus promotes sedimentation of the particles. Furthermore, the increase in the particle size is likely to lead to a deterioration of the film-forming properties of the aqueous polyurethane resin dispersion, causing a defect such as the formation of a crack in a coating film.

Patent document 1 is directed to obtaining sharp thermal coagulation properties in thermal coagulation, especially with steam, of the water-based polyurethane resin, and nowhere discloses a technique of increasing the non-volatile content to not less than 40% by mass while ensuring satisfactory dispersion stability and film-forming properties.

Thus, it has been very difficult to increase the non-volatile content of a conventional aqueous polyurethane resin dispersion to a level of not less than about 40% by mass while ensuring satisfactory dispersion stability and film-forming properties.

It is therefore an object of the present invention to provide an aqueous polyurethane resin dispersion which has a non-volatile content of not less than about 40% by mass, and yet has satisfactory dispersion stability and film-forming properties.

Solution to Problem

The present inventors, through intensive studies, have found that the above problem can be solved by using a hydrophilic alkylene oxide component having a particular alkylene oxide, which is among the components of polyurethane resin particles, in a predetermined amount. The present invention has been accomplished based on this finding. Thus, the present invention may be embodied as follows.

[1] An aqueous polyurethane resin dispersion having a non-volatile content of not less than 40% by mass and including polyurethane resin particles dispersed in water, wherein the polyurethane resin particles contain a polyol component, an isocyanate component, and a hydrophilic alkylene oxide component having at least one active hydrogen group and an alkylene oxide, wherein the content of the hydrophilic alkylene oxide component in the polyurethane resin particles is 1 to 25% by mass, and wherein the volume average particle size of the polyurethane resin particles is 0.3 to 5 $\mu$m.
[2] The aqueous polyurethane resin dispersion as described in [1], wherein the viscosity of the dispersion at 25°C is not more than 3000 mPa·s.
[3] A paint including the aqueous polyurethane resin dispersion as described in [1] or [2].
[4] The paint as described in [3], containing at least one member selected from the group consisting of an isocyanate crosslinking agent, a carbodiimide crosslinking agent and an oxazoline crosslinking agent.
[5] A film configuration including a film-like product of the paint as described in [3] or [4].
[6] A structure including the film configuration as described in [5] as at least one of a surface layer, an intermediate layer and an adhesive layer.
[7] A structure including the paint as described in [3] or [4] in at least one of a surface and the interior.
[8] A synthetic artificial leather including the structure as described in [6] or [7]. Advantageous Effects of Invention

According to the present invention, it is possible to provide an aqueous polyurethane resin dispersion which has a non-volatile content of not less than about 40% by mass, and yet has satisfactory dispersion stability and film-forming properties.

Description of Embodiments

The present invention will now be described in detail. As used herein, polyurethane resin is a general term for polyurethane resin and polyurethane-urea resin.

[Aqueous Polyurethane Resin Dispersion]

The aqueous polyurethane resin dispersion of the present invention is an aqueous polyurethane resin dispersion having a non-volatile content of not less than 40% by mass and including polyurethane resin particles dispersed in water, wherein the polyurethane resin particles contain a polyol component, an isocyanate component, and a hydrophilic alkylene oxide component having at least one active hydrogen group and an alkylene oxide (polyalkylene oxide), wherein the content of the hydrophilic alkylene oxide component in the polyurethane resin particles is 1 to 25% by mass, and wherein the volume average particle size of the polyurethane resin particles is 0.3 to 5 $\mu$m.
In the present invention, the aqueous polyurethane resin dispersion contains, as a constituent component of the polyurethane resin particles, the hydrophilic alkylene oxide component having at least one active hydrogen group and an alkylene oxide (hereinafter sometimes referred to simply as "the hydrophilic alkylene oxide component"). This enables the aqueous polyurethane resin dispersion to have satisfactory dispersion stability and film-forming properties even though the polyurethane resin particles have a relatively large particle size, namely a volume average particle size of 0.3 to 5 $\mu$m. The volume average particle size of 0.3 to 5 $\mu$m makes it easy for the aqueous polyurethane resin dispersion to have a non-volatile content of not less than 40% by mass. The non-volatile content of not less than 40% by mass indicates that the productivity of the aqueous polyurethane resin dispersion is higher than that of conventional aqueous polyurethane resin dispersions.
It is considered that the hydrophilic alkylene oxide component exerts the steric hindrance effect of the alkylene oxide at the surfaces of the resin particles and, when the resin particles, having a large particle size, settle out, the resin particles repel each other due to the steric hindrance effect, whereby aggregation of the resin particles is prevented. Thus, good dispersion stability can be ensured despite the use of the volume average particle size of 0.3 to 5 $\mu$m to achieve the non-volatile content of not less than 40% by mass.
The term "non-volatile component", as used herein, refers to the polyurethane resin particles, the non-volatile additive, etc. which are described below, and particularly to a solid content as obtained when 2 g of the aqueous polyurethane resin dispersion is dried at 120°C for 2 hours.

The constituent components of the polyurethane resin particles contained in the aqueous polyurethane resin dispersion will now be described in greater detail.

<Polyurethane Resin Particles>

The polyurethane resin, which forms the polyurethane resin particles according to the present invention, mainly contains a polyol component, an isocyanate component, and a hydrophilic alkylene oxide component having at least one active hydrogen group and an alkylene oxide.

[Polyol Component]

A polyol that makes the polyol component according to the present invention can be exemplified by the following polyols (1) to (6).

(1) Polycarbonate polyol

Examples of polycarbonate polyol include polytetramethylene carbonate diol, polypentamethylene carbonate diol, polyneopentyl carbonate diol, polyhexamethylene carbonate diol, poly(1,4-cyclohexanedimethylene carbonate) diol, and random/block copolymers thereof.

(2) Polyether polyol

Usable polyether polyols include those obtained by polymerization or copolymerization of an alkylene oxide (e.g. ethylene oxide, propylene oxide or butylene oxide) or a heterocyclic ether (e.g. tetrahydrofuran). Examples of such polyether polyols include polypropylene glycol, polyethylene glycol-polytetramethylene glycol (block or random), polytetramethylene ether glycol, and polyhexamethylene glycol.
The content of ethylene oxide (EO) in a polyether polyol is less than 50% by mass.

(3) Polyester polyol

Usable polyester polyols include condensation polymers of at least one of an aliphatic dicarboxylic acid (e.g. succinic acid, adipic acid, sebacic acid, glutaric acid, or azelaic acid) and an aromatic dicarboxylic acid (e.g. isophthalic acid or terephthalic acid) with a low-molecular weight glycol (e.g. ethylene glycol, 1,2-propylene glycol, 1,3-propylene glycol, 1,3-butane diol, 1,4-butylene glycol, 1,5-pentane diol, 1,6-hexamethylene glycol, neopentyl glycol, or 1,4-bishydroxymethylcyclohexane).
Examples of such polyester polyols include polyethylene adipate diol, polybutylene adipate diol, polyhexamethylene adipate diol, polyneopentyl adipate diol, polyethylene/butylene adipate diol, polyneopentyl/hexyl adipate diol, poly-3-methylpentane adipate diol, and polybutylene isophthalate diol.

(4) Polylactone polyol

Examples of polylactone polyol include polycaprolactone diol and poly-3-methylvalerolactone diol.

(5) Polyolefin polyol

Examples of polyolefin polyol include polybutadiene glycol, polyisoprene glycol, and hydrogenated products thereof.

(6) Polymethacrylate diol

Examples of polymethacrylate diol include $\alpha,\omega$-polymethyl methacrylate diol and $\alpha,\omega$-polybutyl methacrylate diol.
While no particular limitation is placed on the number average molecular weight of the polyol as long as it is not less than 500, it is preferably about 500 to 4000, more preferably about 1000 to 3000. The above-described polyols can be used singly or in a combination of two or more. From the viewpoint of long-term durability, the polyol component preferably includes a polycarbonate diol.
The number average molecular weight refers to a number average molecular weight as calculated in terms of polystyrene, and can be generally determined by gel permeation chromatography (GPC).

[Isocyanate Component]

There is no particular limitation on an isocyanate that makes the isocyanate component according to the present invention; however, a bifunctional polyisocyanate, such as an aliphatic diisocyanate, an alicyclic diisocyanate or an aromatic diisocyanate, is preferred.

Examples of polyisocyanate include tolylene diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate-diphenyl ether, mesitylene diisocyanate, 4,4'-diphenylmethane diisocyanate, durylene diisocyanate, 1,5-naphthalene diisocyanate, benzidine diisocyanate, o-nitrobenzidine diisocyanate, 4,4-diisocyanate dibenzyl, 1,4-tetramethylene diisocyanate, 1,5-pentamethylene diisocyanate, 1,6-hexamethylene diisocyanate, 1,10-decamethylene diisocyanate, 1,4-cyclohexylene diisocyanate, xylylene diisocyanate, 4,4'-methylenebis (cyclohexyl isocyanate), and 1,5-tetrahydronaphthalene diisocyanate, isophorone diisocyanate, and dicyclohexylmethane 4,4'-diisocyanate. Among them, dicyclohexylmethane 4,4'-diisocyanate is preferably used either singly or in combination with other polyisocyanate(s).

When the polyurethane resin is required to have good flexibility, mechanical properties and discoloration resistance as in a vehicular application or in a hypochromic application, it is preferred to use 4,4'-diphenylmethane diisocyanate in combination with an aliphatic diisocyanate or an alicyclic diisocyanate.

The ratio of the isocyanate equivalent of the polyisocyanate component to the hydroxy equivalent of all the components is preferably 1.1 to 2.2, more preferably 1.2 to 1.9. The polyurethane resin has better flexibility and durability when the NCO/OH ratio is 1.2 to 1.9.

[Hydrophilic Alkylene Oxide Component Having at Least One Active Hydrogen Group and an Alkylene Oxide]

The hydrophilic alkylene oxide component having at least one active hydrogen group and an alkylene oxide imparts water dispersibility to the polyurethane resin particles. While the reason for the enhancement of water dispersibility is not clear, it is considered that the alkylene oxide projects in water from the surface of each polyurethane resin particle, which produces a steric hindrance effect that prevents the approach of other polyurethane resin particles.

The active hydrogen in the hydrophilic alkylene oxide component refers to a hydrogen atom reactive with an isocyanate group of an isocyanate, and can be exemplified by a hydrogen atom in a hydroxy group, a mercapto group, an amino group, or the like. Among them, a hydrogen atom in a hydroxy group is preferred.

Further, the alkylene oxide serves as a hydrophilic group which exhibits hydrophilicity and contributes to the water dispersibility of the polyurethane resin particles. The alkylene oxide preferably has 2 to 12 carbon atoms. Examples of such alkylene oxides include ethylene oxide, 1,2- or 1,3-propylene oxide, 1,2-, 2,3- or 1,3- butylene oxide, tetrahydrofuran, 3-methyltetrahydrofuran, $\alpha$-olefin oxide, styrene oxide, and epihalohydrin (e.g. epichlorohydrin). Among them, ethylene oxide is preferably used either singly or in combination with other alkylene oxide(s).

The hydrophilic component having an alkylene oxide preferably contains ethylene oxide repeating units in an amount of not less than 50% by mass, more preferably not less than 70% by mass. Even more preferably, the alkylene oxide is ethylene oxide.

Examples of compounds that make the hydrophilic alkylene oxide component include polyethylene glycol, polyoxyethylene-polyoxypropylene copolymer glycol, polyoxyethylene-polyoxybutylene copolymer glycol, and polyoxyethylene-polyoxyalkylene copolymer glycol, and their monoalkyl ethers such as methyl, ethyl or butyl ethers, and a diol adduct of polyalkylene glycol monoalkyl ether, in which a diol such as a 1,3-diol has been added to one of the monoalkyl ethers.

Among them, polyethylene glycol; polyethylene glycol monoalkyl ethers such as polyethylene glycol monomethyl ether and polyethylene glycol monoethyl ether; and a diol adduct of polyethylene glycol monoalkyl ether, in which a diol such as a 1,3-diol has been added to polyethylene glycol monoalkyl ether, are preferred, for example.

In particular, from the viewpoint of further enhancing the dispersion stability and achieving good re-dispersibility and excellent heat resistance of the polyurethane resin particles, polyethylene glycol monoalkyl ethers and a diol adduct of polyethylene glycol monoalkyl ether are more preferred, and a diol adduct of polyethylene glycol monoalkyl ether is even more preferred.

It is considered that in the polyurethane resin particles, such a compound takes a form which is suited to exert the effect of enhancing the dispersibility and the heat stability of the polyurethane resin particles.

A compound that makes the hydrophilic alkylene oxide component preferably has a number average molecular weight of 500 to 3000, more preferably 700 to 2000.

Examples of commercial products of polyethylene glycol include "PEG #200", "PEG #300", "PEG #400", "PEG #600", "PEG #1000", "PEG #1500", "PEG #1540", and "PEG #2000", manufactured by NOF Corporation.

Examples of commercial products of polyethylene glycol monomethyl ether include "UNIOX M-400", "UNIOX M-550", "UNIOX M-1000", and "UNIOX M-2000", manufactured by NOF Corporation.

An exemplary commercial product of a diol adduct of polyethylene glycol monoalkyl ether is "TEGOMER D3403" manufacture by Evonik Industries AG.

The above-listed compounds are merely examples of preferable components, and do not limit the scope of the present invention. Thus, besides the above-listed compounds, any other commercial compounds that are readily available on the market can be used.

The content of the hydrophilic alkylene oxide component in the polyurethane resin particles is 1 to 25% by mass, preferably 3 to 20% by mass, and more preferably 5 to 10% by mass. When the content is less than 1% by mass, the dispersion stability will be low, and the film-forming properties will be poor, resulting in the formation of a crack in a coating film. When the content is more than 25% by mass, there is a possibility of a deterioration of the mechanical properties and an increase in the viscosity of the aqueous polyurethane resin dispersion, leading to a decrease in the workability and a decrease in the non-volatile content.

Further, by using the hydrophilic alkylene oxide component in an amount of 1 to 20% by mass, it becomes possible to reduce the rate of drying (the rate of evaporation of moisture) upon the formation of a film, thereby preventing the formation of a crack.

[Volume Average Particle Size of Polyurethane Resin Particles]

The polyurethane resin particles of the present invention have a volume average particle size of 0.3 to 5 $\mu$m. When the volume average particle size of the polyurethane resin particles is less than 0.3 $\mu$m, the viscosity of the aqueous dispersion may be so high that a need arises to decrease the non-volatile content. On the other hand, when the volume average particle size exceeds 5 $\mu$m, the particles settle out more easily.

From such viewpoints, the volume average particle size of the polyurethane resin particles is preferably 0.3 to 5.0 $\mu$m, more preferably 0.3 to 3.0 $\mu$m, and even more preferably 0.3 to 1.5 $\mu$m.

[Viscosity of Aqueous Polyurethane Resin Dispersion]

The viscosity of the aqueous polyurethane resin dispersion at 25°C is preferably not more than 3000 mPa·s, more preferably not more than 2000 mPa·s. The viscosity of not more than 2000 mPa·s facilitates removal (e.g., filtering) of foreign matters during the production process, and therefore can increase the production efficiency.

[Method for Producing Aqueous Polyurethane Resin Dispersion]

The aqueous polyurethane resin dispersion according to the present invention can be produced by, for example, the following methods: (1) A method comprising a reaction step of reacting a polyol, a compound that makes the hydrophilic alkylene oxide component, and an isocyanate, and an emulsification/molecular weight-increasing step of adding a surfactant, etc. and then adding a mixture of ion-exchange water and a diamine, etc. to the system after the reaction to increase the molecular weight of the reaction product while emulsifying it. In the emulsification/molecular weight-increasing step, the system is stirred mildly at about 100 to 300 rpm upon the addition of the surfactant, etc., whereas the system is stirred vigorously at about 4000 to 6000 rpm upon the addition of the mixture of ion-exchange water and a diamine, etc. (2) A method comprising reacting and emulsifying at least a polyol, an isocyanate and a compound that makes the hydrophilic alkylene oxide component in a stirring tank having a stirring blade for circulation of a liquid in the tank and a stirring blade for application of a shear force.

The production methods can efficiently produce polyurethane resin particles having the above-described volume average particle size and containing a non-volatile component at the above-described high concentration. In addition, the above-methods can produce an aqueous polyurethane resin dispersion having a desired viscosity.

The method (2) will now be described in more detail. Using a reaction container (the above-described stirring tank) equipped with a stirring blade which can achieve homogeneous dispersion of even an ultra-high viscosity liquid, a polyol, a short-chain diol which is an optional additive, an isocyanate, and a compound that makes the hydrophilic alkylene oxide component are reacted, and then a chain extender such as a short-chain diamine, a chain stopper, a surfactant, and ion-exchange water as a dispersion medium are added and reacted while emulsifying the system, thereby producing an aqueous polyurethane resin dispersion.

The short-chain diol, the chain extender such as a short-chain diamine, and the chain stopper may be used as necessary also in the method (1).

The above stirring tank is, for example, a stirring tank having two or more stirring blades, for example, two stirring blades intended to circulate a liquid in the tank and one stirring blade intended to apply a shear force to a liquid in the tank. In particular, a stirring apparatus, having three stirring blades at upper, intermediate and bottom positions in a reaction container, is preferred. Specific examples may include a high-viscosity, high-shear composite stirring apparatus (product name: NANOVisK, manufactured by Sumitomo Heavy Industries Processing Equip Co., Ltd.), and a vacuum emulsification stirring apparatus (manufacture by Mizuho Industrial Co., Ltd.).

In the production methods (1) and (2), the reaction may be performed by optionally using an organic solvent, followed by depressurization of the reaction container to remove the organic solvent.

Examples of the organic solvent include a ketone solvent (acetone, methyl ethyl ketone, methyl isobutyl ketone, cyclohexanone, etc.), an aromatic hydrocarbon solvent (toluene, xylene, Swazole (aromatic hydrocarbon solvent manufactured by Cosmo Oil Co., Ltd.), Solvesso (aromatic hydrocarbon solvent manufactured by ExxonMobil Chemical Company), etc.), and an aliphatic hydrocarbon solvent (n-hexane, etc.). Among them, methyl ethyl ketone, acetone and tetrahydrofuran are preferred from the viewpoint of handling.

A non-reactive non-ionic surfactant may be used as the surfactant.

Examples of the non-ionic surfactant include a glycol ether such as polyoxyethylene alkyl ether, acetylene glycol, etc.

Example of the short-chain diamine include aliphatic diamine compounds such as ethylenediamine, trimethylene diamine, hexamethylene diamine, and octamethylene diamine; aromatic diamine compounds such as phenylene diamine, 3,3'-dichloro-4,4'-diaminodiphenyl methane, 4,4'-methylenebis(phenylamine), 4,4'-diaminodiphenyl ether, and 4,4'-diaminodiphenyl sulfone; alicyclic diamine compounds such as cyclopentane diamine, cyclohexyl diamine, 4,4-diaminodicyclohexyl methane, 1,4-diaminocyclohexane, and isophorone diamine; and hydrazines such as hydrazine, carbodihydrazide, adipic dihydrazide, sebacic dihydrazide, and phthalic dihydrazide. Among them, hydrazine (hydrazine hydrate) is preferred.

The short-chain diol is a compound having a number average molecular weight of less than 500. Examples of the short-chain diol include aliphatic glycols such as ethylene glycol, 1,2-propanediol, 1,3-propanediol, 1,3-butanediol, 1,4-butanediol, 1,6-hexanediol, and neopentyl glycol, and low-mole alkylene oxide adducts thereof (having a number average molecular weight of less than 500); alkylene ether glycols such as diethylene glycol, triethylene glycol, and dipropylene glycol; alicyclic glycols such 1,4-bishydroxymethylcyclohexane and 2-methyl-1,1-cyclohexanedimethanol, and low-mole alkylene oxide adducts thereof (having a number average molecular weight of less than 500); aromatic glycols such as xylylene glycol, and low-mole alkylene oxide adducts thereof (having a number average molecular weight of less than 500); bisphenols such as bisphenol A, thiobisphenol, and sulfone bisphenol, and low-mole alkylene oxide adducts thereof (having a number average molecular weight of less than 500); and alkyl dialkanolamines such as C1-C18 alkyl diethanolamines. Among them, aliphatic glycols are preferred.

<Amount of Non-Volatile Component in Aqueous Polyurethane Resin Dispersion>

According to the present invention, the content of the non-volatile component in the aqueous polyurethane resin dispersion is not less than 40% by mass. Accordingly, a small amount of a volatile component is to be vaporized and discharged out of the system during a drying process. This can reduce the amount of energy necessary for drying.

In the present invention, from the viewpoint of reducing the amount of energy used in a drying process, the amount of the non-volatile component in the aqueous polyurethane resin dispersion is preferably not less than 41% by mass, more preferably not less than 45% by mass. While there is no particular limitation on the upper limit, it is, for example, about 70% by mass.

Because of the small amount of the volatile component in the aqueous polyurethane resin dispersion of the present invention as described above, the volatile component can be removed easily as compared to conventional aqueous polyurethane resin dispersions. The polyurethane resin particles can be fused and formed into a film through a drying process. The formation of a film herein means, for example, that after applying the aqueous polyurethane resin dispersion of the present invention onto a release sheet such that the thickness of the resulting film becomes 40 $\mu$m, and then drying the coating at 120°C for 5 minutes, the coating can be peeled from the release sheet while the coating keeps the form of a film.

<Additive>

The aqueous polyurethane resin dispersion of the present invention may optionally contain an additive(s). Examples of the additive include a matting agent, an antioxidant (hindered phenol type, phosphite type, thioether type, etc.), a light stabilizer (hindered amine type, etc.), an ultraviolet absorber (benzophenone type, benzotriazole type, etc.), and a gas discoloration stabilizer (hydrazine type, etc.), and a metal deactivator.

Examples of the matting agent include resin particles, silica particles, talc, aluminum hydroxide, calcium sulfate, calcium silicate, calcium carbonate, magnesium carbonate, barium carbonate, alumina silicate, molecular sieve, kaolin, and mica. When the aqueous polyurethane resin dispersion of the present invention contains the matting agent, a film to be used as a surface material can be made matted.

[Paint]

The paint of the present invention is obtained from the above-described aqueous polyurethane resin dispersion of the present invention. Thus, the paint of the present invention includes the aqueous polyurethane resin dispersion and, because of the high content of the non-volatile component, enables a reduction in the amount of energy required for drying.

When an improvement in mechanical properties or durability is intended, the paint of the present invention preferably contains, besides the aqueous polyurethane resin dispersion, at least one member selected from the group consisting of an isocyanate crosslinking agent, a carbodiimide crosslinking agent, an oxazoline crosslinking agent and an epoxy crosslinking agent, and more preferably contains at least one member selected from the group consisting of an isocyanate crosslinking agent, a carbodiimide crosslinking agent and an oxazoline crosslinking agent.

The use of the crosslinking agent in a too large amount can cause a problem, such as embrittlement of a film, or plasticization of a film due to an unreacted crosslinking agent. Therefore, the amount of the crosslinking agent, as calculated in terms of the solid content of the crosslinking agent, is preferably not more than 10 parts by mass, more preferably 1.0 to 7.5 pars by mass, per 100 parts by mass of the polyurethane resin.

[Film Configuration, Structure]

The film configuration of the present invention includes a film-like product obtained from the above-described paint of the present invention. Thus, the film configuration of the present invention includes a film-like product of the paint of the present invention. The structure of the present invention includes the film configuration as at least one of a surface layer, an intermediate layer and an adhesive layer.

The film configuration includes a variety of film forms, such as a single film, and a laminate including at least the film and further including the same film or other layer(s).

The structure of the present invention is preferably a structure including the paint of the present invention in at least one of a surface and the interior. The structure can be exemplified by a synthetic artificial leather. A woven fabric, a non-woven fabric, a sponge, etc. can be used as a substrate of the synthetic artificial leather.

The synthetic artificial leather including the structure of the present invention can be produced, for example, in the following manner. First, the aqueous polyurethane resin dispersion according to the present invention, as an aqueous surface layer-forming agent, is applied onto a release sheet by a known method such as comma coating, knife coating or roll coating. The coating is then dried in an appropriate manner to form a surface layer. A known aqueous polyurethane resin adhesive as an aqueous adhesive is applied onto the surface layer by a known method such as comma coating, knife coating or roll coating. After drying the coating, it is brought into pressure contact with a substrate for synthetic artificial leather. The resulting laminate is subjected to aging, etc., and then is peeled from the release sheet to obtain a synthetic artificial leather.

An exemplary process for producing a film configuration or a structure, which involves applying the aqueous polyurethane resin dispersion of the present invention to a substrate, will now be described.

<Substrate>

The substrate is, for example, a film or a synthetic leather using a resin as described below. The substrate may be a foamed substrate.

Examples of the resin include a polyvinyl chloride resin, olefin resins such as a polyethylene resin, a polypropylene resin and a thermoplastic polyolefin, an ethylene-propylene-diene resin, a styrene-acrylonitrile resin, a polysulfone resin, a polyphenylene ether resin, an acrylic resin, a silicone resin, a fluororesin, a polyester resin, a polyamide resin, a polyimide resin, a polystyrene resin, a polyurethane resin, a polycarbonate resin, a norbornene resin, a cellulose resin, a polyvinyl alcohol resin, a polyvinyl formal resin, a polyvinyl butyral resin, a polyvinylpyrrolidone resin, a polyvinyl acetal resin, a polyvinyl acetate resin, an engineering plastic, and a biodegradable plastic.

Among them, a polyvinyl chloride resin, a thermoplastic polyolefin, polyurethane, polypropylene, and the like may be used as an automobile interior material.

In the case of a foamed substrate, the substrate may be made of a vinyl chloride resin.

The substrate preferably has a thickness of 0.2 to 1.5 mm. In the case of a foamed substrate, the substrate after foaming preferably has a thickness of 0.3 to 4.5 mm.

<Production Method>

The aqueous polyurethane resin dispersion of the present invention is applied to the substrate, followed by drying at 80 to 140°C and optional crosslinking to form a film, thereby producing a film configuration or a structure.

In the case of a foamed substrate, such as a polyvinyl chloride resin substrate sheet, the production process includes a step (foaming step) of forming a foamed vinyl chloride layer by heating the substrate sheet to foam a foaming agent in a foamed vinyl chloride layer-forming composition. For example, prior to the foaming step, the aqueous polyurethane resin dispersion of the present invention is applied onto the substrate sheet by, for example, spray coating or gravure coating to form a coating film. Thereafter, the coated sheet is dried at 80 to 140°C for 1 to 3 minutes to form a dried film, followed by foaming at 130 to 230°C. Further, in order to impart a design, an embossed roll having a design pattern carved in the surface, whose surface is being heated (100 to 190°C), is pressed against the surface treatment layer of the coated sheet to produce a synthetic resin surface (skin) material (e.g., for an automobile seat) having a design pattern formed in the surface (design pattern-forming step).

When the aqueous polyurethane resin dispersion of the present invention is applied to a thermoplastic resin substrate having poor adhesion properties, the substrate may be subjected to a priming treatment to increase the adhesion to the paint.

Each of the foaming step and the design pattern-forming step may be performed prior to the coating film-forming step or after the surface treatment layer-forming step. Thus, it is possible to use a method in which the aqueous polyurethane resin dispersion is applied to the substrate before foaming, followed by heating and foaming, or a method in which the aqueous polyurethane resin dispersion is applied to the substrate after foaming. Because of uniform coating and increased adhesion strength of the surface treatment layer, it is preferred to use the method in which the foaming step is performed after applying the aqueous polyurethane resin dispersion to the substrate.

The thus-formed film preferably has a thickness of 2 to 30 μm.

Examples

The following examples illustrate the present invention in greater detail and are not intended to limit the scope of the invention. In the following description, "parts" and "%" are by mass.

<Production of Aqueous Polyurethane Resin Dispersions PUD1-12 and Comparative PUD1-8>

[NCO End Group-Containing Urethane Prepolymer Synthesis Step]

The atmosphere of a reaction container equipped with a stirrer, a reflux condenser tube, a thermometer, a nitrogen gas blowing tube and a manhole was replaced with nitrogen gas. Thereafter, a polyol, a chain extender, a compound that makes a hydrophilic alkylene oxide component, and an isocyanate were placed in the reaction container in amounts as shown in Table 1 or 2 and, while stirring the mixture, the temperature was raised and the mixture was allowed to react at 95°C to obtain a urethane prepolymer having NCO groups at the molecular ends.

The ratio (NCO/OH) of the isocyanate equivalent of the polyisocyanate component to the hydroxy equivalent of all the components was made 1.5.

[Emulsification and Molecular Weight-Increasing Reaction]

The resulting urethane prepolymer containing NCO end groups was transferred into a stainless-steel container, and was stirred mildly at 100 to 300 rpm for 5 minutes by using T. K. Homodisper (manufactured by PRIMIX Corporation) equipped with a Disper blade having a diameter of 50 mm. Subsequently, a surfactant was added, in an amount as shown in Table 1 or 2, to the prepolymer (a neutralizer was also added for Comp. PUD7, 8), and the system was stirred until it became homogeneous. After confirming the homogeneity of the system, a mixture of ion-exchange water and a diamine was added in an amount as shown in Table 1 or 2 while stirring the system at 4000 to 6000 rpm for 10 minutes, thereby emulsifying the prepolymer and increasing its molecular weight. In this manner, aqueous polyurethane resin dispersions PUD1-12 and Comp. PUD1-8 were obtained.

<Raw Materials for Polyurethane>

- Polyol A: UH-100 (polycarbonate diol; number average molecular weight 1000) manufactured by Ube Industries, Ltd.
- Compound B that makes the hydrophilic alkylene oxide component: PEG 1000 (polyethylene glycol; number average molecular weight 1000) manufactured by NOF Corporation
- Compound C that makes the hydrophilic alkylene oxide component: TEGOMER D 3403 (polyethylene glycol monomethyl ether-1,3-diol; number average molecular weight 1000) manufactured by Evonic Industries
- Compound D that makes the hydrophilic alkylene oxide component: Uniox M-1000 (polyoxyethylene monomethyl ether; number average molecular weight 1000) manufactured by NOF Corporation

- Hydrophilic component E: Bis-MPA (dimethylol propionic acid)
- Chain extender F: 1,4-butanediol
- Isocyanate G: Desmodur W (dicyclohexylmethane 4,4'-diisocyanate) manufactured by Sumika Covestro Urethane Co., Ltd.
- Diamine H: 60% hydrazine hydrate
- Surfactant I: Newcol 2306-Y (polyoxyalkylene alkyl ether; EOPO non-ionic surfactant) manufactured by Nippon Nyukazai Co., Ltd.
- Neutralizer I: triethylamine
- Dispersion medium K: ion-exchange water

<Evaluation Method>

(Particle Dispersion Stability)

1000 ml of the synthesized aqueous polyurethane resin dispersion was placed in a 1000-ml measuring cylinder (inner diameter 80 mm), and allowed to stand in a 25°C environment. After one month had elapsed, an unsettled aqueous polyurethane resin dispersion was removed, and the thickness of settled sediment was measured.

A: Thickness of sediment less than 30 mm
B: Thickness of sediment not less than 30 mm and less than 50 mm
C: Thickness of sediment not less than 50 mm and less than 100 mm
D: Thickness of sediment not less than 100 mm

(Crack Prevention Effect)

The synthesized aqueous polyurethane resin dispersion was applied onto a PET film (A4-sized) at a coating thickness of 100 $\mu$m, followed by heating/drying under the conditions of 120°C/5 minutes to obtain a film. The presence or absence of a crack in the film was visually checked.

B: No crack

D: Crack formed

(Measurement of Non-Volatile Content)

A stainless-steel container was weighed (g0) with an electronic balance, and 2 g of the resulting aqueous polyurethane resin dispersion was placed in the stainless-steel container, and the container was weighed (g1). Next, the stainless-steel container was dried at 120°C for 2 hours, and the container after drying was weighed (g2). The non-volatile content was determined by the following equation (1):

$$\text{Non-volatile content (mass \%)} = (g2 - g0) / (g1 - g0) \times 100 \qquad (1)$$

(Measurement of Volume Average Particle Size)

The resulting aqueous polyurethane resin dispersion was diluted with ion-exchange water such that the non-volatile content became 0.1% by mass, and was then subjected to measurement using a dynamic light scattering (DLS) particle size distribution measuring apparatus [Nanotrac Wave II (manufactured by MicrotracBEL Corp.).

(Viscosity)

The viscosity of the resulting aqueous polyurethane resin dispersion was measured at 25°C with a type-B viscometer (model: BM, #2 rotor/60 rpm or #3 rotor/30 rpm, manufactured by Tokyo Keiki Co. Ltd.).

(Acid Value)

For Comp. PUD7, 8, an acid value was calculated from the amount of the hydrophilic component, etc.

(Re-Dispersibility)

500 g of the resulting aqueous polyurethane resin dispersion was placed in a 1-L plastic bottle (manufactured by AS ONE Corporation), and allowed to stand for 3 days in a 25°C environment. Next, the system was stirred at a desired rotating speed for 10 minutes by using T. K. Homodisper (manufactured by PRIMIX Corporation) equipped with a Disper blade having a diameter of 40 mm, and then filtered with a polyethylene mesh (MS-100, mesh 83/64). The presence or absence of an aggregate or sediment was checked to evaluate re-dispersibility.

A: No aggregate or sediment at a rotating speed of less than 3000 rpm
B: No aggregate or sediment at a rotating speed of not less than 3000 rpm and less than 5000 rpm
C: No aggregate or sediment at a rotating speed of not less than 5000 rpm
D: An aggregate or sediment not re-dispersed

[Table 1]

| Sample | | PUD1 | PUD2 | PUD3 | PUD4 | PUD5 | PUD6 | PUD7 | PUD8 | PUD9 | PUD10 | PUD11 | PUD12 |
|---|---|---|---|---|---|---|---|---|---|---|---|---|---|
| Polyol | A | 90.0 | 97.0 | 70.0 | 65.0 | 90.0 | 97.0 | 70.0 | 65.0 | 90.0 | 97.0 | 70.0 | 65.0 |
| Hydrophilic component | B | 10.0 | 3.0 | 30.0 | 35.0 | - | - | - | - | - | - | - | - |
| | C | - | - | - | - | 10.0 | 3.0 | 30.0 | 35.0 | - | - | - | - |
| | D | - | - | - | - | - | - | - | - | 10.0 | 3.0 | 30.0 | 35.0 |
| | E | - | - | - | - | - | - | - | - | - | - | - | - |
| Chain extender | F | 2.0 | 2.0 | 2.0 | 2.0 | 2.0 | 2.0 | 2.0 | 2.0 | 2.0 | 2.0 | 2.0 | 2.0 |
| Isocyanate | G | 48.5 | 48.5 | 48.5 | 48.5 | 48.5 | 48.5 | 48.5 | 48.5 | 46.0 | 47.5 | 45.0 | 45.0 |
| Diamine | H | 5.0 | 5.0 | 5.0 | 5.0 | 5.0 | 5.0 | 5.0 | 5.0 | 5.0 | 5.0 | 5.0 | 5.0 |
| Surfactant | I | 1.5 | 1.5 | 1.5 | 1.5 | 1.5 | 1.5 | 1.5 | 1.5 | 1.5 | 1.5 | 1.5 | 1.5 |
| Neutralizer | J | - | - | - | - | - | - | - | - | - | - | - | - |
| Dispersion medium | K | 155.0 | 125.0 | 220.0 | 230.0 | 155.0 | 125.0 | 220.0 | 230.0 | 155.0 | 125.0 | 220.0 | 230.0 |
| Hydrophilic component content [wt %] (ratio to PU resin solid content) | | 6.4 | 1.9 | 19.3 | 22.5 | 6.4 | 1.9 | 19.3 | 22.5 | 6.5 | 1.9 | 19.7 | 23.0 |
| Volume average particle size [$\mu$m] | | 1.8 | 3.1 | 0.9 | 0.5 | 1.3 | 2.2 | 0.7 | 0.4 | 1.0 | 2.3 | 0.6 | 0.4 |
| Acid value (in PU resin) | | - | - | - | - | - | - | - | - | - | - | - | - |
| Non-volatile content (mass %) | | 50.8 | 55.7 | 42.3 | 40.6 | 51.2 | 56.0 | 41.3 | 40.3 | 50.1 | 54.8 | 41.1 | 40.7 |
| Viscosity [mPa·s/25°C] | | 180 | 110 | 230 | 1510 | 162 | 50 | 210 | 2100 | 180 | 60 | 180 | 2030 |
| Particle dispersion stability | | B | B | A | A | A | B | A | A | A | B | A | A |
| Prevention of crack | | B | B | B | B | B | B | B | B | B | B | B | B |
| Re-dispersibility | | A | B | A | A | A | B | A | A | A | B | A | A |

The values in Tables 1 and 2, which indicate the amounts used, are parts by mass.

[Table 2]

| Sample | | Comp. PUD1 | Comp. PUD2 | Comp. PUD3 | Comp. PUD4 | Comp. PUD5 | Comp. PUD6 | Comp. PUD7 | Comp. PUD8 |
|---|---|---|---|---|---|---|---|---|---|
| Polyol | A | 99.0 | 60.0 | 99.0 | 60.0 | 99.0 | 60.0 | 90.0 | 97.0 |
| Hydrophilic component | B | 1.0 | 40.0 | - | - | - | - | - | - |
| | C | - | - | 1.0 | 40.0 | - | - | - | - |
| | D | - | - | - | - | 1.0 | 40.0 | - | - |
| | E | - | - | - | - | - | - | 10.0 | 3.0 |
| Chain extender | F | 2.0 | 2.0 | 2.0 | 2.0 | 2.0 | 2.0 | 2.0 | 2.0 |
| Isocyanate | G | 48.5 | 48.5 | 48.0 | 42.5 | 48.0 | 42.5 | 74.0 | 56.0 |
| Diamine | H | 5.0 | 5.0 | 5.0 | 5.0 | 5.0 | 5.0 | 13.0 | 7.5 |
| Surfactant | I | 1.5 | 1.5 | 1.5 | 1.5 | 1.5 | 1.5 | 2.0 | 1.5 |
| Neutralizer | J | - | - | - | - | - | - | 7.5 | 2.3 |
| Dispersion medium | K | 125.0 | 280.0 | 155.0 | 280.0 | 155.0 | 280.0 | 450.0 | 140.0 |
| Hydrophilic component content [wt %] (ratio to PU resin solid content) | | 0.6 | 25.7 | 0.6 | 26.8 | 0.6 | 26.8 | 5.3 | 1.8 |
| Volume average particle size [μm] | | 5.2 | 0.5 | 5.1 | 0.4 | 6.0 | 0.4 | 0.02 | 0.9 |
| Acid value (in PU resin) | | - | - | - | - | - | - | 22.2 | 7.6 |
| Non-volatile content (mass %) | | 55.4 | 35.6 | 54.5 | 34.5 | 55.1 | 36.5 | 29.6 | 54.5 |
| Viscosity [mPa·s/25°C] | | 23.0 | 1220.0 | 90.0 | 1280.0 | 90.0 | 1520.0 | 645.0 | 40.0 |
| Particle dispersion stability | | D | A | D | A | D | A | A | B |
| Prevention of crack | | D | B | D | B | D | B | B | D |
| Re-dispersibility | | D | A | D | A | C | A | A | C |

The aqueous polyurethane resin dispersions PUD1-12 were excellent in all of the particle dispersion stability, the prevention of crack and the re-dispersibility. The Comp. PUD2, 4, 6, 7 were also good in these properties. However, their non-volatile content of less than 40% by mass requires a larger amount of heat upon drying. Therefore, the comparative aqueous polyurethane resin dispersions are inferior in the productivity.

**Claims**

1. An aqueous polyurethane resin dispersion having a non-volatile content of not less than 40% by mass and comprising polyurethane resin particles dispersed in water,

wherein the polyurethane resin particles contain a polyol component, an isocyanate component, and a hydrophilic alkylene oxide component having at least one active hydrogen group and an alkylene oxide,
wherein the content of the hydrophilic alkylene oxide component in the polyurethane resin particles is 1 to 25% by mass, and
wherein the volume average particle size of the polyurethane resin particles is 0.3 to 5 μm.

2. The aqueous polyurethane resin dispersion according to claim 1, wherein the viscosity of the dispersion at 25°C is not more than 3000 mPa·s.

3. A paint comprising the aqueous polyurethane resin dispersion according to claim 1 or 2.

4. The paint according to claim 3, containing at least one member selected from the group consisting of an isocyanate crosslinking agent, a carbodiimide crosslinking agent and an oxazoline crosslinking agent.

5. A film configuration comprising a film-like product of the paint according to claim 3 or 4.

6. A structure comprising the film configuration according to claim 5 as at least one of a surface layer, an intermediate layer and an adhesive layer.

7. A structure comprising the paint according to claim 3 or 4 in at least one of a surface and the interior.

8. A synthetic artificial leather comprising the structure according to claim 6 or 7.

## INTERNATIONAL SEARCH REPORT

| International application No. |
| --- |
| PCT/JP2019/043604 |

**A. CLASSIFICATION OF SUBJECT MATTER**

B32B 27/40(2006.01)i; D06N 3/14(2006.01)i; C09D 175/08(2006.01)i; C09J 175/04(2006.01)i; C09J 175/08(2006.01)i; C08G 18/00(2006.01)i; C08G 18/28(2006.01)i; C08G 18/40(2006.01)i; C08G 18/48(2006.01)i
FI:      C08G18/00 C; C08G18/28 015; C08G18/40 009; C08G18/48; C08G18/00 A; B32B27/40; D06N3/14 101; C09D175/08; C09J175/08; C09J175/04

According to International Patent Classification (IPC) or to both national classification and IPC

**B. FIELDS SEARCHED**

Minimum documentation searched (classification system followed by classification symbols)
B32B27/40; D06N3/14; C09D175/08; C09J175/04; C09J175/08; C08G18/00; C08G18/28; C08G18/40; C08G18/48

Documentation searched other than minimum documentation to the extent that such documents are included in the fields searched
Published examined utility model applications of Japan       1922–1996
Published unexamined utility model applications of Japan     1971–2020
Registered utility model specifications of Japan             1996–2020
Published registered utility model applications of Japan     1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-518064 A (BAYER MATERIALSCIENCE AG.) 09.08.2012 (2012-08-09) claims, paragraphs [0001]–[0003], [0060], examples | 1–8 |
| X | JP 2008-255196 A (ADEKA CORPORATION) 23.10.2008 (2008-10-23) claims, paragraphs [0001], [0002], [0031], [0055], examples | 1–7 |
| A | | 8 |
| X | JP 2001-354847 A (ASAHI DENKA KOGYO KK.) 25.12.2001 (2001-12-25) claims, paragraphs [0002], [0039], examples | 1–3, 5–7 |
| A | | 4, 8 |
| X | JP 7-10947 A (DAINIPPON INK AND CHEMICALS, INCORPORATED) 13.01.1995 (1995-01-13) claims, paragraphs [0002], [0030], examples | 1–3, 5–7 |
| A | | 4, 8 |

☒ Further documents are listed in the continuation of Box C.   ☒ See patent family annex.

| | |
| --- | --- |
| *     Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 29 January 2020 (29.01.2020) | 10 February 2020 (10.02.2020) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
| --- |
| PCT/JP2019/043604 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 5-117358 A (KANEBO NSC LTD.) 14.05.1993 (1993-05-14) claims, examples | 1-3, 5-7<br>4, 8 |

Form PCT/ISA/210 (continuation of second sheet) (January 2015)

**INTERNATIONAL SEARCH REPORT**

Information on patent family members

International application No.

PCT/JP2019/043604

| Patent Documents referred in the Report | Publication Date | Patent Family | Publication Date |
|---|---|---|---|
| JP 2012-518064 A | 09 Aug. 2012 | US 2011/0288204 A1 claims, paragraphs [0001]-[0003] [0067], examples WO 2010/094417 A1 EP 2221330 A1 TW 201041922 A CN 102325816 A ES 2400415 T | |
| JP 2008-255196 A | 23 Oct. 2008 | (Family: none) | |
| JP 2001-354847 A | 25 Dec. 2001 | (Family: none) | |
| JP 7-10947 A | 13 Jan. 1995 | (Family: none) | |
| JP 5-117358 A | 14 May 1993 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3972234 B